(19) Europäisches Patentamt
European Patent Office
Office européen des brevets

(11) EP 4 769 557 A1

## (12) EUROPEAN PATENT APPLICATION
published in accordance with Art. 153(4) EPC

(43) Date of publication:
01.07.2026 Bulletin 2026/27

(21) Application number: 25866622.1

(22) Date of filing: 11.09.2025

(51) International Patent Classification (IPC):
$H01M\ 4/36^{(2006.01)}$    $H01M\ 4/587^{(2010.01)}$
$H01M\ 4/38^{(2006.01)}$    $H01M\ 4/48^{(2010.01)}$
$H01M\ 4/133^{(2010.01)}$    $H01M\ 4/134^{(2010.01)}$
$H01M\ 10/0525^{(2010.01)}$    $H01M\ 4/02^{(2006.01)}$

(52) Cooperative Patent Classification (CPC):
H01M 4/364; H01M 4/133; H01M 4/134;
H01M 4/386; H01M 4/583; H01M 4/587;
H01M 10/0525; H01M 2004/021; H01M 2004/027;
H01M 2220/20; Y02E 60/10

(86) International application number:
PCT/KR2025/095554

(87) International publication number:
WO 2026/059413 (19.03.2026 Gazette 2026/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 12.09.2024 KR 20240124737
10.09.2025 KR 20250128957

(71) Applicant: LG ENERGY SOLUTION, LTD.
Seoul 07335 (KR)

(72) Inventors:
• KIM, Nayeong
Daejeon 34122 (KR)
• KIM, Donghyuk
Daejeon 34122 (KR)
• LEE, Yong Ju
Daejeon 34122 (KR)

(74) Representative: Hoffmann Eitle
Patent- und Rechtsanwälte PartmbB
Arabellastraße 30
81925 München (DE)

## (54) ANODE COMPOSITION, ANODE, AND SECONDARY BATTERY

(57) An anode composition according to an embodiment of the present invention comprises a silicon-based active material and a carbon-based active material, and simultaneously satisfies an optimal sphericity ratio represented by formula (1) and an optimal particle diameter ratio represented by formula (2). Formula (1): $0.7 \leq X1/Y1 \leq 1.5$ Formula (2): $0.08 \leq X2/Y2 \leq 0.5$. In formula (1), X1 denotes the sphericity of the silicon-based active material, and Y1 denotes the sphericity of the carbon-based active material, and in formula (2), X2 denotes an average particle diameter (D50) of the silicon-based active material, and Y2 denotes an average particle diameter (D50) of the carbon-based active material.

[FIG. 2]

(a)

(b)

**Description**

TECHNICAL FIELD

This application is based on and claims priority from Korean Patent Application No. 10-2024-0124737 filed on September 12, 2024 and Korean Patent Application No. 10-2025-0128957 filed on September 10, 2025, with the Korean Intellectual Property Office, the disclosures of which are incorporated herein in their entirety by reference.

The present disclosure relates to a negative electrode composition, a negative electrode, a secondary battery, and a battery module and a battery pack including the same.

BACKGROUND

The demand for alternative energy or clean energy is increasing due to the rapid increase in the use of fossil fuels. In response to the demand, one of the most actively researched fields is the field of power generation and power storage using electrochemical reactions. At present, a representative example of electrochemical devices using such electrochemical energy is a secondary battery, and its application range is gradually expanding.

As the technology development and demand for mobile devices increase, the demand for secondary batteries has also increased rapidly. Among the secondary batteries, a lithium secondary battery having a high energy density and voltage, a long cycle life, and a low self-discharge rate has been commercialized and widely used. Also, in order to manufacture an electrode for a high-capacity lithium secondary battery, research is being actively conducted on development of a high-density electrode having a higher energy density per unit volume.

In general, a secondary battery includes a positive electrode, a negative electrode, an electrolyte, and a separator. The negative electrode includes a negative electrode active material through which lithium ions released from the positive electrode are intercalated and deintercalated. As for the negative electrode active material, silicon-based particles with a large discharge capacity may be used.

SUMMARY

Technical Problem

The present specification provides a negative electrode composition using a silicon-based active material, a negative electrode including the same, a secondary battery including the negative electrode, a battery module, and a battery pack.

Technical Means

In one embodiment of the present specification, provided is a negative electrode composition including a silicon-based active material; and a carbon-based active material. The negative electrode composition satisfies the following formulas (1) and (2).

$$\text{Formula (1): } 0.7 \leq X1/Y1 \leq 1.5$$

$$\text{Formula (2): } 0.08 \leq X2/Y2 \leq 0.5$$

In Formula (1), X1 represents a sphericity of the silicon-based active material, and Y1 represents a sphericity of the carbon-based active material.

In Formula (2), X2 represents an average particle diameter (D50) of the silicon-based active material, and Y2 represents an average particle diameter (D50) of the carbon-based active material.

In another embodiment, provided is a negative electrode that includes a negative electrode current collector layer and a negative electrode active material layer provided on one surface or both surfaces of the negative electrode current collector layer. The negative electrode active material layer includes a negative electrode composition according to the present application,

In another embodiment, provided is a secondary battery that includes a positive electrode, a negative electrode according to the present application and a separator provided between the positive electrode and the negative electrode.

In another embodiment, provided is a battery module including the secondary battery according to the present application.

In another embodiment, provided is a battery pack including the secondary battery according to the present application.

In another embodiment, provided is a battery pack including the battery module according to the present application.

In another embodiment, provided is a vehicle including the battery pack according to the present application.

In another embodiment, the silicon-based active material may have a Brunauer, Emmett, Teller (BET) specific surface area of 0.01 $m^2$/g to 150.0 $m^2$/g.

In another embodiment, as for the carbon-based active material, natural graphite, artificial graphite, or a mixture of natural graphite and artificial graphite may be used.

Technical Effect

The negative electrode composition according to one embodiment of the present disclosure includes the silicon-based active material and the carbon-based active material, and is characterized in that their particle diameter ratio is optimized and at the same time their sphericity ratio is optimized.

In the negative electrode composition according to one embodiment of the present disclosure, it is possible to provide an electrode with improved dispersibility and improved quality by controlling the particle diameter ratio of the silicon-based active material and the carbon-based active material, and furthermore by optimally controlling the sphericity ratio.

Also, in the case of the negative electrode composition according to one embodiment of the present disclosure, a contact loss between the active materials may be reduced and then a pore structure may be secured, thereby improving the life performance.

BRIEF DESCRIPTION OF THE DRAWINGS

The following drawings attached hereto exemplify embodiments of the present disclosure and serve to further understand the technical idea of the present disclosure together with the detailed description of the disclosure to be described later. Therefore, the present disclosure should not be construed as being limited to the matters illustrated in the drawings.

FIG. 1 is a view for explaining a negative electrode according to a conventional technology.

FIG. 2 is a view for explaining a negative electrode according to one embodiment of the present disclosure.

FIG. 3 is a view illustrating a stacked structure of the negative electrode according to one embodiment of the present disclosure.

FIG. 4 is a view illustrating a stacked structure of a secondary battery according to one embodiment of the present application.

FIG. 5 is a view illustrating a vehicle including a battery pack according to one embodiment of the present application.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

Description of reference numbers:

1. carbon-based active material
2. silicon-based active material
10. negative electrode current collector layer
20. negative electrode active material layer
30. separator
40. positive electrode active material layer
50. positive electrode current collector layer
100. negative electrode
200. positive electrode
500. battery pack

V. vehicle

DETAILED DESCRIPTION

Before the explanation of the present disclosure, first, some terms are defined.

In the present specification, when it is said that a certain part "includes" a certain component, this means that the certain part may further include other components rather than excluding other components unless specifically stated to the contrary.

In the present specification, "p to q" means a range of p or more and q or less.

In the present specification, the "specific surface area" is measured by a Brunauer, Emmett, Teller method (BET), and is calculated from a nitrogen gas adsorption amount by using BELSORP-mini II of BEL Japan under a liquid nitrogen temperature (77K). That is, in the present application, the BET specific surface area may refer to a specific surface area measured by the above measurement method. The BET specific surface area may be measured in accordance with DIN 66131 by using $N_2$.

In the present specification, "Dn" refers to a particle size distribution, and refers to a particle size at a n% point in the cumulative distribution of the number of particles based on the particle size. That is, D50 is a particle size (median particle size) at a 50% point in the cumulative distribution of the number of particles based on the particle size, D90 is a particle size at a 90% point in the cumulative distribution of the number of particles based on the particle size, and D10 is a particle size at a 10% point in the cumulative distribution of the number of particles based on the particle size. Meanwhile, the median particle size may be measured by using a laser diffraction method. For example, powder to be measured is dispersed in a dispersion medium, and then is introduced into a commercially available laser diffraction particle size measurement device (e.g., Microtrac S3500). When particles pass through a laser beam, a particle size distribution is calculated by measuring a difference in the diffraction pattern depending on the particle size.

In the present specification, the "particle size (or the particle diameter)" may mean an average diameter or a representative diameter of particles. The particle may be in the form of a primary particle, or may be in the form of a secondary particle in which the primary particles are agglomerated. Also, the median particle diameter of some particles may be used with the same meaning as the average particle diameter, D50, or the particle diameter, and the median particle diameter may refer to the size of some particles.

In the present specification, the "primary particle" means an original particle when different types of particles are formed from a certain particle, and the primary particles may be aggregated, combined, or assembled to form a secondary particle.

The term "secondary particle" used in the present disclosure refers to a physically distinguishable large particle formed by the aggregation, combination, or assembly of individual primary particles.

In the present specification, the meaning that a polymer contains a certain monomer as a monomer unit means that the monomer participates in a polymerization reaction and is included as a repeating unit within the polymer. In the present specification, when it is said that a polymer contains a monomer, this is interpreted in the same way that a polymer contains a monomer as a monomer unit.

In the present specification, a "polymer" is understood to be used in a broad sense including copolymers unless specified as a "homopolymer."

In the present specification, a weight average molecular weight (Mw) and a number average molecular weight (Mn) are polystyrene equivalent molecular weights measured by gel permeation chromatography (GPC) using monodisperse polystyrene polymers (standard sample) having various degrees of polymerization as standard materials. The monodisperse polystyrene polymers are commercially available for molecular weight measurement. In the present specification, a molecular weight means a weight average molecular weight unless otherwise specified.

In accordance with the recent increase in demand for high-density energy batteries, research is being actively conducted on a method of increasing the capacity by using silicon-based compounds such as Si/C or $SiO_x$ as a negative electrode active material. The silicon-based compounds have higher capacities than graphite-based materials. The silicon-based compound, which is a high-capacity material, is advantageous in that its capacity is higher than that of conventionally used graphite, but has a problem in that the volume rapidly expands during a charging process and a conductive path is cut off, thereby deteriorating battery characteristics.

In consideration of these problems, various methods are being discussed such as a method of suppressing the volume expansion itself or a method for preventing or suppressing a conductive path from being disconnected, for example, a method of controlling a driving potential, a method of additionally forming a thin film coating on the surface of an active material layer, a method of controlling the content of a silicon-based active material in a negative electrode, and the like. However, on the contrary, the above methods may lower the performance of a battery. Thus, their application is limited, and there are still limitations in the commercialization of manufacturing of a negative electrode battery with a high content of silicon-based compounds.

In the present disclosure, in consideration of this, provided are a negative electrode composition using a mixture of a silicon-based active material and a carbon-based active material, a negative electrode including the same, a secondary battery including the negative electrode, a battery module and a battery pack.

Hereinafter, descriptions will be made such that a person with ordinary skill in the technical field to which the present disclosure pertains can easily implement the present disclosure. However, the present disclosure may be implemented in various different forms, and is not limited by the following description.

Negative Electrode Composition

In the present disclosure, it has been found that when a negative electrode active material obtained by mixing a silicon-based active material and a carbon-based active material (especially graphite) is applied to a negative electrode composition, it is possible to exhibit high stability while maintaining a high capacity and a high energy density. However, when the silicon-based active material is mixed with the carbon-based active material to improve the capacity and energy density, it was observed that the behavior of the silicon-based active material in a mixture electrode exhibits a tendency different from that of a negative electrode to which only the silicon-based active material is applied. In mixture electrodes, individual active materials exhibit different levels of swelling according to the types of the active materials. As a result, the resistance may increase in the driving environment of the battery, and the life characteristics may deteriorate.

Therefore, as a result of research on a method of improving the capacity retention and stability in the mixed electrode of the silicon-based active material and the carbon-based active material, it was found that the above-described problems may be improved by implementing the optimal size ratio (particle diameter ratio) between the silicon-based active material and the carbon-based active material and at the same time controlling the sphericity relationship between the active materials. Also, the effect of improving life and resistance characteristics was not clearly exhibited when only the optimal size ratio between the silicon-based active material and the carbon-based active material was controlled or only the sphericity ratio was controlled, but it was found that it is possible to provide a secondary battery exhibiting significantly improved life and resistance characteristics by simultaneously controlling the optimal size ratio and the sphericity ratio.

By controlling the average particle diameter ratio of the silicon-based active material and the carbon-based active material, and furthermore by optimally controlling the sphericity ratio, it is possible to obtain the effect of improving the quality of the electrode through dispersibility improvement and improving the life performance through pore structure securement.

In one embodiment of the present specification, a negative electrode composition including a silicon-based active material and a carbon-based active material is provided. The negative electrode composition satisfies the following formulas (1) and (2).

$$\text{Formula (1): } 0.7 \leq X1/Y1 \leq 1.5$$

$$\text{Formula (2): } 0.08 \leq X2/Y2 \leq 0.5$$

In Formula (1), X1 represents a sphericity of the silicon-based active material, and Y1 represents a sphericity of the carbon-based active material.

In Formula (2), X2 represents an average particle diameter (D50) of the silicon-based active material, and Y2 represents an average particle diameter (D50) of the carbon-based active material.

According to one embodiment of the present disclosure, the dispersibility in the composition/electrode may be improved and the contact loss may be reduced by simultaneously optimizing the sphericity ratio represented by Formula (1) and the average particle diameter ratio represented by Formula (2).

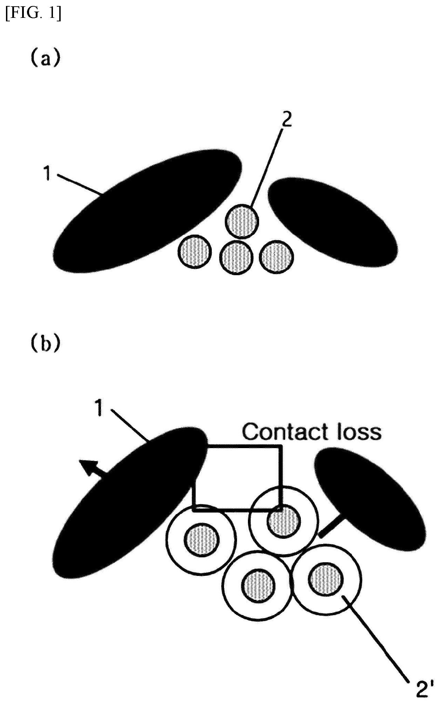

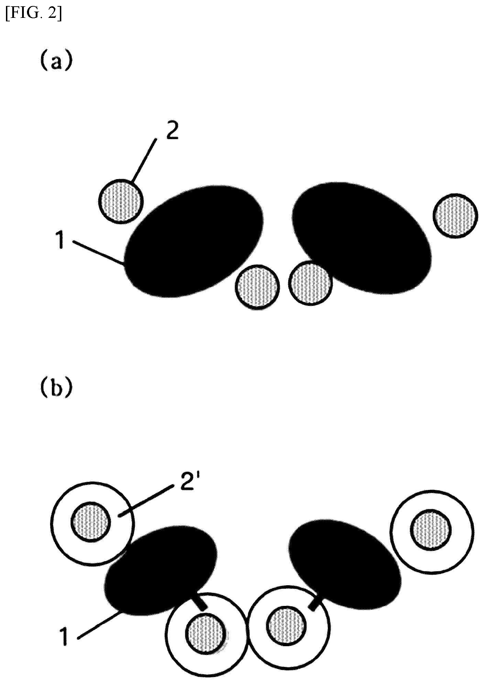

FIG. 1 is a view for explaining a negative electrode according to a conventional technology, and FIG. 2 is a view for explaining a negative electrode according to one embodiment of the present disclosure.

FIG. 1 (a) illustrates a silicon-based active material 2 and a carbon-based active material 1 in a negative electrode before charging and discharging, in the negative electrode manufactured by a conventional negative electrode composition, and FIG. 1 (b) illustrates a swollen silicon-based active material 2' and the carbon-based active material 1 in the negative electrode, which are found during a charging process, in the negative electrode manufactured by the conventional negative electrode composition.

In the research process for increasing the capacity of the negative electrode, it was found that even when a negative electrode composition obtained by mixing a silicon-based active material and a carbon-based active material is used to increase the capacity, when the sizes and sphericities of the silicon-based active material and the carbon-based active material are not optimized, the swelling levels of the silicon-based active material and the carbon-based active material vary as the cycle progresses under the battery driving environment. Then, as in FIG. 1 (b), the pores within the electrode are reduced due to the influence of the volume expansion of the swollen silicon-based active material 2' and by-products caused by particle breakage, and thus a contact loss occurs in the electrode due to the electrode structure so that the degradation in life and resistance may be found.

Referring to FIG. 2, in the negative electrode composition according to one embodiment of the present disclosure, in the silicon-based active material and the carbon-based active material, the sphericity ratio represented by Formula (1) is optimized and at the same time, the average particle diameter ratio represented by Formula (2) is optimized. FIG. 2 (a) illustrates a silicon-based active material 2 and a carbon-based active material 1 in a negative electrode before charging and discharging. FIG. 2 (b) illustrates that since a swollen silicon-based active material 2' and the carbon-based active material 1 are mixed at the optimized sphericity ratio in the negative electrode, during a charging process, the occurrence of contact loss in the battery driving environment may be reduced, and furthermore the dispersibility may be improved, thereby improving the electrode quality.

Hereinafter, each of Formula (1) and Formula (2) will be described.

In one embodiment of the present disclosure, the silicon-based active material and the carbon-based active material satisfy the sphericity ratio represented by Formula (1).

$$\text{Formula (1): } 0.7 \leq X1/Y1 \leq 1.5$$

In Formula (1), X1 represents the sphericity of the silicon-based active material, and Y1 refers to the sphericity of the carbon-based active material.

In one embodiment of the present disclosure, the sphericity refers to the ratio (Dmin/Dmax) of the minor axis length (Dmin) to the major axis length (Dmax) of each active material. Here, the minor axis length and the major axis length may be measured through the cross-sectional analysis of the negative electrode including the negative electrode composition.

For example, the sphericity may be measured through the cross-sectional analysis of the electrode including the negative electrode composition, and the cross-sectional analysis of the negative electrode may be performed using an ion milling device. A negative electrode sample prepared by coating of the negative electrode composition on copper foil (Cu foil) is milled using a Hitachi IM4000 device. For example, after processing is performed for approximately 3 to 4 hours per sample by irradiation with an ion beam at a voltage of 1.5 kV, cross-sectional images may be measured by a Hitachi S-4800 SEM. The sphericity may be measured by obtaining the ratio of the major axis and the minor axis of each particle observed on each SEM image obtained from the cross-sectional images. Five regions of the cross-section are randomly selected, and then each region is imaged at a 1K magnification. The average value of sphericities may be measured from the obtained cross-sectional images and then may be used.

In the cross-sectional analysis of the negative electrode, for the secondary battery including the negative electrode, the measurement may be performed on the electrode before or after electrolyte impregnation, or the measurement may be performed before and after charging/discharging of the secondary battery. In consideration of the fact that deformation of particles may occur after charging/discharging of the secondary battery, the sphericity may be measured before charging/discharging of the secondary battery.

In one embodiment of the present disclosure, the sphericity ratio (X1/Y1) value of Formula (1) is 0.7 to 1.5. For example, the sphericity ratio value of Formula (1) may be 0.7 or more, 0.71 or more, 0.8 or more or 0.81 or more, and may be 1.5 or less, 1.2 or less, 1.1 or less or 1.05 or less. Otherwise, the sphericity ratio value of Formula (1) may be 0.71 to 1.5, 0.71 to 1.2, or 0.71 to 1.05. When Formula (1) satisfies the above range, the sphericity ratio of the silicon-based active material and the carbon-based active material may be optimized, and the dispersibility in the composition may be improved. Thus, the battery including the negative electrode composition may exhibit a long life and a low resistance increase rate.

In one embodiment of the present disclosure, the sphericity X1 of the silicon-based active material is 0.6 to 1. For example, X1 may be 0.6 or more, 0.65 or more, 0.7 or more, or 0.73 or more, and may be 1 or less, 0.99 or less, 0.97 or less, 0.96 or less or 0.8 or less. Otherwise, X1 may be 0.6 to 0.99, 0.65 to 0.99 or 0.65 to 0.96.

In one embodiment of the present disclosure, the sphericity Y1 of the carbon-based active material is 0.7 to 1. For example, Y1 may be 0.7 or more, 0.8 or more or 0.85 or more, and may be 1 or less, 0.96 or less, 0.93 or less or 0.91 or less. Otherwise, Y1 may be 0.7 to 0.96, 0.8 to 0.93, 0.8 to 0.91 or 0.85 to 0.97.

In one embodiment of the present disclosure, the silicon-based active material and the carbon-based active material satisfy the average particle diameter ratio represented by Formula (2).

$$\text{Formula (2): } 0.08 \leq X2/Y2 \leq 0.5$$

In Formula (2), X2 refers to the average particle diameter (D50) of the silicon-based active material, and Y2 refers to the average particle diameter (D50) of the carbon-based active material.

In Formula (2), the average particle diameter (D50) may refer to a particle size (median particle size) at a 50% point in the cumulative distribution of the number of particles based on the particle size. For the average particle diameter (D50), powder to be measured is dispersed in a dispersion medium, and then is introduced into a commercially available laser diffraction particle size measurement device (*e.g.,* Microtrac S3500). When particles pass through a laser beam, a particle size distribution is calculated by measuring a difference in the diffraction pattern depending on the particle size.

In one embodiment of the present disclosure, the average particle diameter ratio (X2/Y2) of Formula (2) is 0.08 to 0.5. For example, the average particle diameter ratio of Formula (2) may be 0.08 or more, 0.1 or more or 0.2 or more, and may be 0.5 or less, 0.4 or less or 0.37 or less. Otherwise, the average particle diameter ratio of Formula (2) may be 0.08 to 0.4, 0.1 to 0.4, 0.2 to 0.4 or 0.2 to 0.37. When Formula (2) satisfies the above range, the average particle diameter ratio of the silicon-based active material and the carbon-based active material is optimized, thereby improving the dispersibility in the composition, and improving swelling characteristics. Thus, the battery including the negative electrode composition may exhibit a long life and a low resistance increase rate.

In one embodiment of the present disclosure, the average particle diameter X2 of the silicon-based active material is 1 $\mu$m to 15 $\mu$m. For example, the average particle diameter X2 of the silicon-based active material may be 1 $\mu$m or more, greater than 1 $\mu$m, greater than 1.2 $\mu$m, 1.3 $\mu$m or more, 1.5 $\mu$m or more or 1.7 $\mu$m or more, and may be 15 $\mu$m or less, 13 $\mu$m or less, 10 $\mu$m or less, 8 $\mu$m or less or 5 $\mu$m or less. Otherwise, X2 may be greater than 1.2 $\mu$m and 15 $\mu$m or less, 1.3 $\mu$m to 15 $\mu$m, 1.7 $\mu$m to 15 $\mu$m, greater than 1.2 $\mu$m and 10 $\mu$m or less, 1.3 $\mu$m to 8 $\mu$m or 1.7 $\mu$m to 5 $\mu$m.

In one embodiment of the present disclosure, the average particle diameter Y2 of the carbon-based active material is 5 $\mu$m to 30 $\mu$m. For example, the average particle diameter Y2 of the carbon-based active material may be 5 $\mu$m or more, 6 $\mu$m or more or 7 $\mu$m or more, and may be 30 $\mu$m or less, 20 $\mu$m or less, 18 $\mu$m or less or 17 $\mu$m or less. Otherwise, Y2 may be 5 $\mu$m to 20 $\mu$m or 7 $\mu$m to 20 $\mu$m.

**In** one embodiment of the present disclosure, the silicon-based active material includes at least one selected from Si, $SiO_x$ (0<x<2), Si/C and Si-alloys.

**In** one embodiment of the present disclosure, the silicon-based active material includes at least one selected from Si and $SiO_x$ (0<x<2).

**In** one embodiment of the present disclosure, the silicon-based active material is Si. For example, the silicon-based active material is pulverized Si.

According to one embodiment of the present disclosure, the silicon-based active material contains Si, and Si is included in an amount of 70 parts by weight or more based on 100 parts by weight of the silicon-based active material. For example, Si may be included in an amount of 70 parts by weight or more, 80 parts by weight or more, 90 parts by weight or more or 95 parts by weight or more based on 100 parts by weight of the silicon-based active material, and may be included in an amount of 100 parts by weight or less, less than 100 parts by weight, 99 parts by weight or less, 97 parts by weight or less or 95 parts by weight or less.

In one embodiment of the present disclosure, the silicon-based active material may include silicon-based particles containing Si in an amount of 100 parts by weight based on 100 parts by weight of the silicon-based active material.

In the present specification, Si refers to pure silicon (Si) particles. For example, using pure silicon (Si) particles as the silicon-based active material may mean that pure Si particles ($SiO_x$ (x=0)), which is not combined with other particles or elements, may be included within the above range, based on 100 parts by weight of the entire silicon-based active material as described above.

In one embodiment of the present disclosure, the silicon-based active material may include metal impurities. Here, the impurities are metals that may be generally contained in the silicon-based active material, and may be included in an amount of 0.1 parts by weight or less based on 100 parts by weight of the negative electrode active material.

In one embodiment of the present disclosure, the silicon-based active material generally has a characteristic BET specific surface area. The BET specific surface area of the silicon-based active material is 0.01 $m^2$/g to 150.0 $m^2$/g, 0.1 $m^2$/g to 100.0 $m^2$/g, 0.2 $m^2$/g to 80.0 $m^2$/g, or 0.2 $m^2$/g to 18.0 $m^2$/g. The BET specific surface area is measured in accordance with DIN 66131 (for example, using nitrogen).

In one embodiment of the present disclosure, the silicon-based active material may exist in, for example, a crystalline or amorphous form, and the silicon particles may be spherical or fragmented particles. Otherwise, the silicon particles may also have a fibrous structure or may be present in the form of a silicon-containing film or coating.

In one embodiment of the present disclosure, the carbon-based active material may include at least one selected from artificial graphite and natural graphite.

For example, as for the carbon-based active material, natural graphite, artificial graphite or a mixture of natural graphite and artificial graphite may be used.

In another embodiment of the present disclosure, the carbon-based active material is natural graphite.

The artificial graphite is generally prepared by carbonizing raw materials such as coal tar, coal tar pitch, and petroleum heavy oil fraction, at 2,500 °C or higher. The artificial graphite obtained through this graphitization undergoes particle size adjustment such as grinding and secondary particle formation and then is used as the negative electrode active material. In the case of the artificial graphite, crystals are randomly distributed within particles. The artificial graphite has a lower sphericity than natural graphite and has a somewhat pointed shape.

Also, the artificial graphite may have an average particle diameter (D50) of 5 $\mu$m to 30 $\mu$m, or 10 $\mu$m to 25 $\mu$m.

Before being processed, the natural graphite is generally in the form of plate-shaped aggregates. The plate-shaped particles are subjected to post-treatment processing such as a particle grinding and reassembly process and then are formed into a spherical shape with a smooth surface in order to be used as an active material for manufacturing the electrode.

Also, the natural graphite may have an average particle diameter (D50) of 5 $\mu$m to 30 $\mu$m, or 7 $\mu$m to 25 $\mu$m.

When the carbon-based active material is a mixture of artificial graphite and natural graphite, the weight ratio of artificial graphite and natural graphite may be 9.99 : 0.01 to 0.01 : 9.99, or 9.7 : 0.3 to 7:3. When this weight ratio range is satisfied, more excellent output may be exhibited.

In one embodiment of the present disclosure, the content of the silicon-based active material may be 1 part by weight to 20 parts by weight based on 100 parts by weight of the negative electrode active material. For example, the silicon-based active material may be included in an amount of 1 part by weight or more or 3 parts by weight or more based on 100 parts by weight of the negative electrode active material, and may be included in an amount of 20 parts by weight or less, 15 parts by weight or less or 10 parts by weight or less.

In one embodiment of the present disclosure, the content of the carbon-based active material may be 80 parts by weight to 99 parts by weight based on 100 parts by weight of the negative electrode active material. For example, the carbon-based active material may be included in an amount of 80 parts by weight or more, 85 parts by weight or more or 90 parts by weight or more based on 100 parts by weight of the negative electrode active material, and may be included in an amount of 99 parts by weight or less, 95 parts by weight or less, 91 parts by weight or less or 90 parts by weight or less.

In one embodiment of the present disclosure, the content of the silicon-based active material may be 1 to 20 parts by weight based on 100 parts by weight of the negative electrode composition. For example, the silicon-based active material may be included in an amount of 1 part by weight or more or 3 parts by weight or more based on 100 parts by weight of the negative electrode composition, and may be included in an amount of 20 parts by weight or less, 15 parts by weight or less or 10 parts by weight or less.

In one embodiment of the present disclosure, the content of the carbon-based active material may be 70 parts by weight to 97 parts by weight based on 100 parts by weight of the negative electrode composition. For example, the carbon-based active material may be included in an amount of 70 parts by weight or more, 75 parts by weight or more, 80 parts by weight or more or 90 parts by weight or more based on 100 parts by weight of the negative electrode composition, and may be included in an amount of 97 parts by weight or less, 95 parts by weight or less, 91 parts by weight or less or 90 parts by weight or less.

Since the silicon-based active material and the carbon-based active material satisfy the optimal sphericity ratio and the optimal particle diameter ratio, even when the silicon-based active material with a significantly high capacity is included in the above range, the negative electrode composition according to one embodiment of the present disclosure has excellent characteristics in life and resistance increase rate without deteriorating the performance of the negative electrode.

The negative electrode composition provided in one embodiment of the present disclosure further includes a negative electrode binder; and a negative electrode conductive material.

In one embodiment of the present disclosure, the negative electrode binder includes at least one of an aqueous binder and a non-aqueous binder.

In one embodiment of the present disclosure, the negative electrode binder may include at least one selected from polyvinylidene fluoride-hexafluoropropylene copolymer (PVDF-co-HFP), polyvinylidene fluoride, polyacrylonitrile, polymethyl methacrylate, polyvinyl alcohol, carboxy methyl cellulose (CMC), starch, hydroxy propyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber (SBR), fluororubber, poly acrylic acid, polyacrylamide (PAM), and substances in which hydrogen is substituted with Li, Na, or Ca, or may include various copolymers thereof.

The negative electrode binder performs a role of holding the active material and the conductive material to prevent or suppress the distortion, structural deformation, etc. of a negative electrode structure. All general binders satisfying the above role may be applied, and, for example, an aqueous binder may be used.

In the negative electrode composition provided in one embodiment of the present disclosure, the content of the negative electrode binder is 1 part by weight to 12 parts by weight based on 100 parts by weight of the negative electrode composition. For example, the content of the negative electrode binder may be 1 part by weight or more or 2 parts by weight or more based on 100 parts by weight of the negative electrode composition, and may be 12 parts by weight or less, 10 parts by weight or less, 8 parts by weight or less, 6 parts by weight or less or 5 parts by weight or less.

In the case of the negative electrode including the negative electrode composition according to the present disclosure, since the silicon-based active material is used in an amount of the above parts by weight to maximize capacity characteristics, the volume expansion during charging/discharging is greater than in the case where a conventional carbon-based active material is used as a main active material. Accordingly, the negative electrode binder is included in the above amount, and thus it is characterized in that it is possible to efficiently prevent the volume of the silicon-based active material with high stiffness from being expanded during charging/discharging.

In one embodiment of the present disclosure, the negative electrode conductive material may include at least one selected from a particulate conductive material, a sheet-type conductive material and a linear conductive material.

In one embodiment of the present disclosure, the particulate conductive material refers to a spherical or particulate conductive material which may be used to improve conductivity in the negative electrode and has conductivity without causing chemical changes. For example, the particulate conductive material may be at least one type selected from natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and polyphenylene derivatives, and may include carbon black in terms of high conductivity achievement, and excellent dispersibility.

In one embodiment of the present disclosure, the BET specific surface area of the particulate conductive material may be 40 m$^2$/g to 70 m$^2$/g, and may be 45 m$^2$/g to 65 m$^2$/g, or 50 m$^2$/g to 60 m$^2$/g.

In one embodiment of the present disclosure, the particulate conductive material may satisfy the volatile matter of 0.01% to 1%, 0.01% to 0.3%, or 0.01% to 0.1%.

When the volatile matter of the particulate conductive material satisfies the above range, functional groups may be present on the surface of the particulate conductive material, and, when water is used as a solvent, the particulate conductive material may be smoothly dispersed in the solvent.

In one embodiment of the present disclosure, the conductive material may include a sheet-type conductive material.

The sheet-type conductive material may perform a role of improving conductivity by increasing the contact between surfaces of silicon particles within the negative electrode, and at the same time, a role of suppressing a conductive path from being disconnected by volume expansion, and then may be expressed as a plate-shaped conductive material or a bulk-type conductive material.

In one embodiment of the present disclosure, the sheet-type conductive material may include at least one selected from plate-shaped graphite, graphene, graphene oxide, and graphite flakes, or may be plate-shaped graphite.

In one embodiment of the present disclosure, the average particle diameter (D50) of the sheet-type conductive material may be 2 μm to 7 μm, or may be 3 μm to 6 μm or 4 μm to 5 μm. When the above range is satisfied, due to a sufficient particle size, dispersion is easy without causing an excessive increase in viscosity of the negative electrode slurry. Therefore, the dispersion effect is excellent in the dispersion using the same equipment and time.

In one embodiment of the present disclosure, as for the sheet-type conductive material, a high-specific-surface-area sheet-type conductive material having a high BET specific surface area; or a low-specific-surface-area sheet-type conductive material may be used.

In one embodiment of the present disclosure, the high-specific-surface-area sheet-type conductive material; or the low-specific-surface-area sheet-type conductive material may be used as the sheet-type conductive material without limitation. However, the sheet-type conductive material according to this application may be affected to some extent by the dispersion effect in electrode performance, and thus the low-specific-surface-area sheet-type conductive material causing no problems in dispersion may be used.

In one embodiment of the present disclosure, the BET specific surface area of the sheet-type conductive material may be 5 m$^2$/g or more.

In another embodiment, the BET specific surface area of the sheet-type conductive material may be 5 m$^2$/g to 500 m$^2$/g, and may be 5 m$^2$/g to 300 m$^2$/g, or 5 m$^2$/g to 250 m$^2$/g.

In another embodiment, the sheet-type conductive material is a high-specific-surface-area sheet-type conductive material, and its BET specific surface area may satisfy a range of 50 m$^2$/g to 500 m$^2$/g, 80 m$^2$/g to 300 m$^2$/g, or 100 m$^2$/g to 300 m$^2$/g.

In another embodiment, the sheet-type conductive material is a low-specific-surface-area sheet-type conductive material, and its BET specific surface area may satisfy a range of 5 m$^2$/g to 40 m$^2$/g, 5 m$^2$/g to 30 m$^2$/g, or 5 m$^2$/g to 25 m$^2$/g.

Other conductive materials may include linear conductive materials such as carbon nanotubes. The carbon nanotubes may be bundle-type carbon nanotubes. The bundle-type carbon nanotubes may include a plurality of carbon nanotube units. For example, here, the 'bundle type' refers to a secondary structure in the form of a bundle or a rope unless otherwise stated, in which carbon nanotube units are arranged side by side or are entangled while the longitudinal axes of the carbon nanotube units are substantially in the same orientation. The carbon nanotube unit has a graphite surface (graphite sheet) in the form of a cylinder with a nano-sized diameter, and has a sp$^2$-bonded structure. Here, depending on the angle and structure in which the graphite surface is rolled, characteristics of a conductor or a semiconductor may be exhibited. The bundle-type carbon nanotubes may be uniformly dispersed in the manufacturing of the negative electrode compared to the entangled-type carbon nanotubes, and then a conductive network in the negative electrode may be smoothly formed, thereby improving the conductivity of the negative electrode.

In one embodiment of the present disclosure, the linear conductive material may include carbon nanotubes (CNTs). For example, the carbon nanotubes (CNTs) may include single-walled carbon nanotubes (SWCNTs); or multi-walled carbon nanotubes (MWCNTs).

In the negative electrode composition provided in one embodiment of the present disclosure, the content of the negative electrode conductive material is 0.01 parts by weight to 20 parts by weight based on 100 parts by weight of the negative electrode composition. For example, the content of the negative electrode conductive material may be 0.01 parts by weight or more, 0.1 parts by weight or more, or 0.5 parts by weight or more based on 100 parts by weight of the negative electrode composition, and may be 20 parts by weight or less, 15 parts by weight or less, 10 parts by weight or less or 5 parts by weight or less.

The negative electrode conductive material according to the present disclosure has a substantially separate configuration from a positive electrode conductive material applied to the positive electrode. For example, the negative electrode conductive material according to this application performs a role of making a contact point between silicon-based active materials causing a very large expansion in the electrode volume in charging and discharging. The positive electrode conductive material performs a role of providing some conductivity while acting as a buffer that alleviates stress during rolling, and thus has substantially different configurations and roles from the negative electrode conductive material of the present disclosure.

Also, the negative electrode conductive material according to the present disclosure is applied to the negative electrode composition containing the silicon-based active material, and has a substantially different configuration from a conductive material applied to the negative electrode composition containing only the carbon-based active material. That is, the conductive material used for an electrode having only the carbon-based active material simply has smaller particles than the carbon-based active material (e.g., graphite), and thus has characteristics of improving output characteristics and providing some conductivity. Accordingly, the configuration and role are different from those of the negative electrode conductive material applied together with the silicon-based active material as in the present disclosure.

Negative Electrode

According to one embodiment of the present disclosure, provided is a negative electrode that includes a negative electrode current collector layer; and a negative electrode active material layer provided on one surface or both surfaces of the negative electrode current collector layer. The negative electrode active material layer includes a negative electrode composition according to one embodiment of the present disclosure.

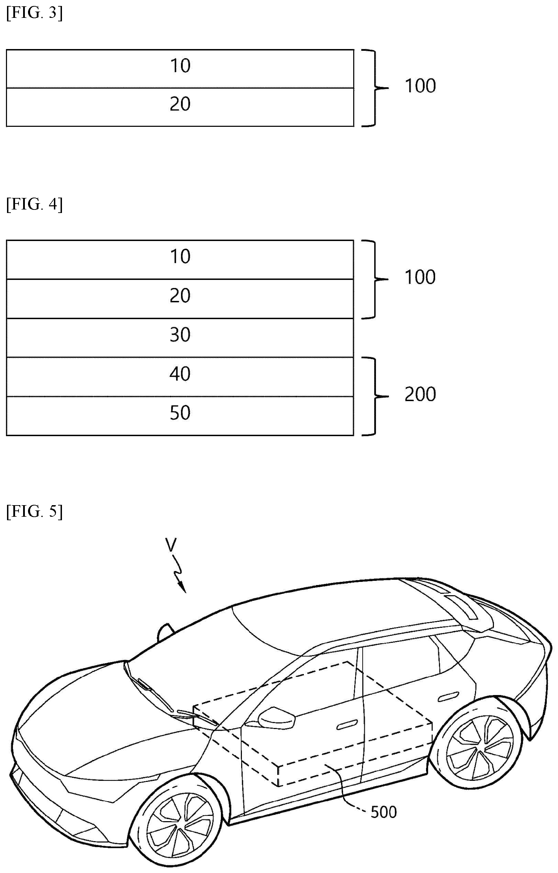

FIG. 3 is a view illustrating a stacked structure of the negative electrode according to one embodiment of the present disclosure. For example, it is found that a negative electrode 100 has a negative electrode active material layer 20 on one surface of a negative electrode current collector layer 10. Although FIG. 3 illustrates that the negative electrode active material layer is formed on one surface, the negative electrode active material layer may be formed on both surfaces of the negative electrode current collector layer.

In one embodiment of the present disclosure, the negative electrode may be formed by applying a negative electrode composition-containing negative electrode slurry to one surface or both surfaces of the negative electrode current collector layer and drying the slurry.

Here, the negative electrode slurry may include the above-described negative electrode composition; and a slurry solvent.

In one embodiment of the present disclosure, the negative electrode may be formed by applying the negative electrode slurry to one surface or both surfaces of the negative electrode current collector layer and drying the slurry.

In one embodiment of the present disclosure, the solid content of the negative electrode slurry may satisfy a range of 5% to 50%.

In another embodiment, the solid content of the negative electrode slurry may satisfy a range of 5% to 50%, 7% to 50%, or 10% to 46%.

The solid content of the negative electrode slurry may mean the amount of the negative electrode composition included in the negative electrode slurry, and may mean the content of the negative electrode composition based on 100 parts by weight of the negative electrode slurry.

When the solid content of the negative electrode slurry satisfies the above range, the viscosity is appropriate in formation of the negative electrode active material layer. Therefore, the particle agglomeration phenomenon of the negative electrode composition may be minimized, and thus the negative electrode active material layer may be efficiently formed.

In one embodiment of the present application, the slurry solvent may be used without limitation as long as it can dissolve the negative electrode composition. For example, water (distilled water) or N-methyl-2-pyrrolidone (NMP) may be used.

In one embodiment of the present application, the negative electrode current collector layer has a thickness of 1 $\mu$m to 100 $\mu$m. The negative electrode current collector layer is not particularly limited as long as it has high conductivity without causing chemical changes in the corresponding battery. For example, copper, stainless steel, aluminum, nickel, titanium, baked carbon, copper or stainless steel whose surface is treated with carbon, nickel, titanium, or silver, and aluminum-cadmium alloy may be used. Also, fine irregularities may be formed on the surface to enhance the binding force of the negative electrode active material, and the negative electrode active material may be used in various forms such as a film, a sheet, a foil, a net, a porous body, a foam, and a nonwoven fabric.

In the negative electrode provided in one embodiment of the present disclosure, the thickness of the negative electrode current collector layer is 1 $\mu$m to 100 $\mu$m, and the thickness of the negative electrode active material layer is 5 $\mu$m to 500 $\mu$m.

However, the thicknesses of the negative electrode current collector layer and the negative electrode active material layer may be variously modified according to the type and purpose of the negative electrode to be used, and are not limited thereto.

In one embodiment of the present disclosure, the porosity of the negative electrode active material layer may satisfy a range of 10% to 60%.

In another embodiment, the porosity of the negative electrode active material layer may satisfy a range of 10% to 60%, 20% to 50%, or 30% to 45%.

The porosity varies depending on the compositions and contents of the silicon-based active material, the carbon-based active material, the negative electrode conductive material, and the negative electrode binder included in the negative electrode active material layer, and the above range is satisfied when the silicon-based active material, the carbon-based active material, the negative electrode conductive material, and the negative electrode binder according to the present application are included on the basis of specific compositions and contents. Accordingly, it is characterized in that the electrode has appropriate ranges of electrical conductivity and resistance.

Secondary Battery

In one embodiment of the present application, provided is a lithium secondary battery that includes a positive electrode; a negative electrode according to one embodiment of the present disclosure; a separator provided between the positive electrode and the negative electrode; and an electrolyte.

FIG. 4 is a view illustrating a stacked structure of the secondary battery according to one embodiment of the present application. For example, it is found that the negative electrode 100 has the negative electrode active material layer 20 on one surface of the negative electrode current collector layer 10, and it is found that a positive electrode 200 for the lithium secondary battery has a positive electrode active material layer 40 on one surface of a positive electrode current collector layer 50. This illustrates that the negative electrode 100 for the lithium secondary battery and the positive electrode 200 for the lithium secondary battery are formed in a structure where they are stacked with a separator 30 interposed therebetween.

The secondary battery according to one embodiment of the present specification may include the above-described negative electrode. For example, the secondary battery may include a negative electrode, a positive electrode, a separator interposed between the positive electrode and the negative electrode, and an electrolyte, and the negative electrode is the same as the above-described negative electrode. The negative electrode has been described above, and thus its additional descriptions will be omitted.

The positive electrode may include a positive electrode current collector and a positive electrode active material layer formed on the positive electrode current collector and including a positive electrode active material.

In the positive electrode, the positive electrode current collector is not particularly limited as long as it has conductivity without causing chemical changes in the battery. For example, stainless steel, aluminum, nickel, titanium, baked carbon, or aluminum or stainless steel whose surface is treated with carbon, nickel, titanium, silver, etc. may be used. Also, the positive electrode current collector may generally have a thickness of 3 $\mu$m to 500 $\mu$m, and it is possible to increase the adhesive force of the positive electrode active material by forming fine irregularities on the surface of the current collector. For example, the use in various forms such as a film, a sheet, a foil, a net, a porous body, a foam, and a nonwoven fabric, is possible.

The positive electrode active material may be a generally used positive electrode active material. Examples of the positive electrode active material may include: layered compounds such as lithium cobalt oxide ($LiCoO_2$) and lithium nickel oxide ($LiNiO_2$), or compounds substituted with one or more transition metals; lithium iron oxide such as $LiFe_3O_4$; lithium manganese oxide such as chemical formulas $Li_{1+c1}Mn_{2-c1}O_4$ ($0 \leq c1 \leq 0.33$), $LiMnO_3$, $LiMn_2O_3$, and $LiMnO_2$; lithium copper oxide ($Li_2CuO_2$); vanadium oxide such as $LiV_3O_8$, $V_2O_5$, and $Cu_2V_2O_7$; Ni site-type lithium nickel oxide represented by the chemical formula $LiNi_{1-c2}M_{c2}O_2$ (where M is at least one selected from Co, Mn, Al, Cu, Fe, Mg, B, and Ga, and $0.01 \leq c2 \leq 0.3$); lithium manganese composite oxide represented by a chemical formula $LiMn_{2-c3}M_{c3}O_2$ (where M is at least one selected from Co, Ni, Fe, Cr, Zn and Ta, and $0.01 \leq c3 \leq 0.1$) or $Li_2Mn_3MO_8$ (where M is at least one selected from Fe, Co, Ni, Cu, and Zn); and $LiMn_2O_4$ in which a part of Li in the chemical formula is substituted with an alkaline earth metal ion, but are not limited thereto. The positive electrode may also be Li-metal.

The positive electrode active material layer may include a positive electrode conductive material and a positive electrode binder together with the above-described positive electrode active material.

Here, the positive electrode conductive material is used to provide conductivity to the electrode, and can be used without particular limitation as long as it has electronic conductivity without causing chemical changes in a configured battery. Examples thereof may include: graphite such as natural graphite or artificial graphite; carbon-based materials such as carbon black, acetylene black, Ketjen black, channel black, furnace black, lamp black, thermal black, and carbon fiber; metal powder or metal fiber such as copper, nickel, aluminum, and silver; conductive whiskers such as zinc oxide and potassium titanate; conductive metal oxides such as titanium oxide; or conductive polymers such as polyphenylene derivatives, which may be used either alone or as a mixture of two or more thereof.

Also, the positive electrode binder performs a role of improving the adhesion between particles of the positive electrode active material and the adhesive strength between the positive electrode active material and the positive electrode current collector. Examples thereof may include polyvinylidene fluoride (PVdF), vinylidene fluoride-hexafluoropropylene copolymer (PVdF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluororubber, or various copolymers thereof, which may be used either alone or as a mixture of two or more thereof.

The separator separates the negative electrode from the positive electrode and provides a movement passage for lithium ions, and may be used without particular limitation as long as it is generally used as a separator in a secondary battery. The separator may have low resistance to ion migration of the electrolyte and excellent electrolyte moisture retention capacity. For example, the separator may be a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure of two or more layers thereof. Also, a conventional porous non-woven fabric, for example, a non-woven fabric made of high melting point-glass fiber, polyethylene terephthalate fiber, etc. may also be used. Also, a coated separator containing ceramic components or polymer materials may also be used so as to ensure heat resistance or mechanical strength, and may be optionally used in a single-layer or multi-layer structure.

Examples of the electrolyte may include an organic liquid electrolyte, an inorganic liquid electrolyte, a solid polymer electrolyte, a gel-type polymer electrolyte, a solid inorganic electrolyte, and a melted inorganic electrolyte, which may be used in manufacturing of lithium secondary batteries, but are not limited thereto.

For example, the electrolyte may include a non-aqueous organic solvent and a metal salt.

Examples of the non-aqueous organic solvent include aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, and ethyl propionate.

Among the above carbonate-based organic solvents, ethylene carbonate and propylene carbonate, which are cyclic carbonates, are high-viscosity organic solvents and may easily dissociate lithium salts due to a high dielectric constant. Therefore, when the cyclic carbonates are mixed at an appropriate ratio with linear carbonates having a low viscosity and a low dielectric constant, such as dimethyl carbonate and diethyl carbonate, an electrolyte having a high electrical conductivity may be obtained.

As for the metal salt, a lithium salt may be used, and the lithium salt is a material that is easily soluble in the non-aqueous electrolyte. For example, the anion of the lithium salt may be at least one selected from $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In addition to the electrolyte components, the electrolyte may further include one or more types of additives, such as, for example, a haloalkylene carbonate-based compound such as difluoro ethylenecarbonate, pyridine, triethylphosphite, triethanolamine, cyclic ether, ethylene diamine, n-glyme, hexamethyl phosphoric acid triamide, nitrobenzene derivatives, sulfur, quinone imine dye, N-substituted oxazolidinone, N,N-substituted imidazolidine, ethylene glycol dialkyl ether, ammonium salt, pyrrole, 2-methoxy ethanol, or aluminum trichloride for the purpose of improving life characteristics of the battery, suppressing the reduction of the battery capacity, and improving the discharge capacity of the battery.

Battery Module and Battery Pack

In one embodiment, the present disclosure provides a battery module including the secondary battery according to one embodiment of the present disclosure.

In one embodiment, the present disclosure provides a battery pack including the secondary battery according to one embodiment of the present disclosure.

In one embodiment, the present disclosure provides a battery pack including the battery module according to one embodiment of the present disclosure.

In one embodiment, the present disclosure provides a battery module including the secondary battery as a unit cell and a battery pack including the secondary battery or the battery module. The battery module and the battery pack include the secondary battery having a high capacity, a high rate capability and high cycle characteristics, and thus can be used as a power source for medium to large-sized devices selected from an electric vehicle, a hybrid electric vehicle, a plug-in hybrid electric vehicle and a power storage system.

FIG. 5 is a view illustrating a vehicle according to one embodiment of the present disclosure.

Hereinafter, referring to FIG. 5, a battery pack 500 according to the present disclosure may be applied to a vehicle V such as an electric vehicle or a hybrid vehicle. That is, the vehicle V according to the present disclosure may include the battery pack 500 according to the present disclosure. The battery pack 500 may be installed in a vehicle body frame under a vehicle seat or a trunk space. Then, the vehicle V according to one embodiment of the present disclosure may further include other various components, etc. included in the vehicle in addition to this battery pack 500. For example, the vehicle V according to one embodiment of the present disclosure may further include a vehicle body, a motor, a control device such as an electronic control unit (ECU), etc., in addition to the battery pack 500 according to one embodiment of the present disclosure.

Hereinafter, various examples will be presented to help understand the present disclosure, but the above examples are only illustrative of this disclosure. It is obvious to those skilled in the art that various changes and modifications are possible within the scope of this disclosure and the range of the technical idea, and it is natural that such changes and modifications fall within the scope of the attached patent claims.

**<Mode for carrying out the invention>**

<Preparation Example>

Example 1

1) Preparation of negative electrode composition

A negative electrode composition was prepared, in which 95 parts by weight of natural graphite (95 parts by weight based on 100 parts by weight of a negative electrode active material) as a carbon-based active material and pulverized Si (5 parts by weight based on 100 parts by weight of the negative electrode active material) as a silicon-based active material and 2.5 parts by weight of styrene-butadiene rubber (SBR) and 1.1 parts by weight of carboxymethyl cellulose (CMC) as binders were included based on 100 parts by weight of the negative electrode composition. In addition, 1.0 parts by weight of carbon black as a particulate conductive material and 0.4 parts by weight of carbon nanotubes (CNT) as a linear conductive material were included.

The sphericity of the carbon-based active material was 0.87, and the average particle diameter (D50) was 7.6 $\mu$m, and the sphericity of the silicon-based active material was 0.74, and the average particle diameter (D50) was 1.78 $\mu$m.

2) Production of negative electrode

A negative electrode slurry was prepared by adding distilled water as a solvent to the negative electrode composition prepared in Preparation Example 1) (solid content: 46 weight%).

For example, CNT, carbon black, CMC and SBR were dispersed in distilled water by using a homomixer at 2,500 rpm for 30 min, and then the negative electrode active material was added and dispersed at 2500 rpm for 30 min to produce the negative electrode slurry.

As for the CNT, CNT having a BET specific surface area satisfying 1000 to 1500 m$^2$/g, and an aspect ratio of 10,000 or more was used, and a solution obtained through dispersion in carboxymethyl cellulose (CMC) was used.

Both surfaces of a copper current collector (thickness of 15 $\mu$m) as a negative electrode current collector layer were coated with the negative electrode slurry at a loading amount of 271 mg/25 cm$^2$, roll-pressed, and dried in a vacuum oven of 130 °C for 10 h, thereby forming a negative electrode active material layer. Then, a negative electrode was produced.

3) Manufacturing of secondary battery

LiNi$_{0.6}$Co$_{0.2}$Mn$_{0.2}$O$_2$ (average particle diameter (D50): 15 $\mu$m) as a positive electrode active material, carbon black (product name: Super C65, manufacturer: Timcal) as a conductive material, and polyvinylidene fluoride (PVdF) as a binder were prepared at a weight ratio of 97:1.5:1.5, and were added to N-methyl-2-pyrrolidone (NMP) as a solvent for forming a positive electrode slurry, thereby preparing the positive electrode slurry (solid content concentration: 78 weight%).

Both surfaces of an aluminum current collector (thickness: 12 $\mu$m) as a positive electrode current collector were coated with the positive electrode slurry at a loading amount of 537 mg/25 cm$^2$, roll-pressed, and dried in a vacuum oven of 130 °C for 10 h, thereby forming a positive electrode active material layer. Then, a positive electrode was produced.

A polyethylene separator was interposed between the positive electrode and the negative electrode and an electrolyte was injected to manufacture a lithium secondary battery.

In the above-used electrolyte, vinylene carbonate (VC) was added in an amount of 3 weight% based on the total weight of the electrolyte, to an organic solvent obtained by mixing fluoroethylene carbonate (FEC) and diethyl carbonate (DEC) at a volume ratio of 10:90, and $LiPF_6$ was added as a lithium salt at a concentration of 1 M.

Examples 2 to 7 and Comparative Examples 1 to 3

Secondary batteries were manufactured in the same manner as in Example 1 except that a silicon-based active material and a carbon-based active material having the sphericity values and the average particle diameters (D50) in Table 1 were used as the silicon-based active material and the carbon-based active material.

[Table 1]

| | Silicon-based active material | | Carbon-based active material | | Formula (1): X1/Y1 | Formula (2): X2/Y2 |
|---|---|---|---|---|---|---|
| | Sphericity (X1) | D50 ($\mu$m, X2) | Sphericity (Y1) | D50 ($\mu$m, Y2) | | |
| Example 1 | 0.74 | 1.78 | 0.87 | 7.6 | 0.85 | 0.23 |
| Example 2 | 0.96 | 4.96 | 0.91 | 17 | 1.05 | 0.29 |
| Example 3 | 0.65 | 4.94 | 0.91 | 17 | 0.71 | 0.29 |
| Example 4 | 0.73 | 2.82 | 0.87 | 7.6 | 0.84 | 0.37 |
| Example 5 | 0.74 | 1.78 | 0.91 | 17 | 0.81 | 0.10 |
| Example 6 | 0.96 | 2.67 | 0.76 | 9.2 | 1.26 | 0.29 |
| Example 7 | 0.73 | 2.82 | 0.76 | 9.2 | 0.96 | 0.31 |
| Comparative Example 1 | 0.61 | 1.2 | 0.91 | 17 | 0.67 | 0.07 |
| Comparative Example 2 | 0.73 | 1.2 | 0.91 | 17 | 0.80 | 0.07 |
| Comparative Example 3 | 0.59 | 1.2 | 0.87 | 7.6 | 0.68 | 0.16 |

The following items were evaluated for Examples and Comparative Examples, and the results are noted in Table 2.

Experimental Example 1: Evaluation of Capacity Retention

Life evaluation was performed on the secondary battery including the negative electrode prepared in Examples and Comparative Examples by using an electrochemical charger/discharger. The secondary battery was subjected to the in-situ cycling test at a charging rate of 1/4 C and a discharging rate of 1/3 C at 4.2-2.5 V. The test was terminated after 200 cycles of discharging, and the capacity retention was measured by charging/discharging (4.2-2.5 V) at 0.33 C/0.33 C every 50 cycles.

Capacity retention (%) = {(Discharge capacity at Nth cycle)/(Discharge capacity at 1st cycle)} X 100 %

Experimental Example 2: Evaluation of Resistance Increase Rate

After the capacity retention was measured by charging/discharging (4.2-2.5 V) at 0.33 C/0.33 C every 50 cycles in the test in Experimental Example 1, the resistance was measured by discharging with a pulse of 2.5 C at SOC 50, and then the comparative analysis on the resistance increase rate was performed.

[Table 2]

| | Formula (1): X1/Y1 | Formula (2): X2/Y2 | Capacity retention (%) after 200 cycles | Resistance increase rate (%) after 200 cycles |
|---|---|---|---|---|
| Example 1 | 0.85 | 0.23 | 68 | 30 |
| Example 2 | 1.05 | 0.29 | 67 | 32 |
| Example 3 | 0.71 | 0.29 | 65 | 33 |
| Example 4 | 0.84 | 0.37 | 67 | 31 |
| Example 5 | 0.81 | 0.10 | 64 | 35 |
| Example 6 | 1.26 | 0.29 | 62 | 37 |
| Example 7 | 0.96 | 0.31 | 63 | 37 |
| Comparative Example 1 | 0.67 | 0.07 | 58 | 50 |
| Comparative Example 2 | 0.80 | 0.07 | 59 | 45 |
| Comparative Example 3 | 0.68 | 0.16 | 61 | 38 |

Referring to Table 2, it was found that Examples 1 to 7 satisfying both Formula (1) and Formula (2) exhibit a high capacity retention and a low resistance increase rate compared to Comparative Examples 1 to 3. This is understood as a phenomenon that occurs in the case of Examples 1 to 7, in which the sphericity ratio and the average particle diameter ratio between the active materials are optimized and the dispersibility is improved, and thus a contact loss between the active materials within the electrode is reduced.

In the meantime, it can be found that Comparative Examples 1 to 3, in which Formula (1) and Formula (2) are not included in the scope of the present disclosure, exhibit a low capacity retention and a high resistance increase rate compared to Examples. This is understood as a phenomenon that occurs in Comparative Examples 1 to 3, in which since Formula (1) and Formula (2) are not simultaneously satisfied, the carbon-based active material and the silicon-based active material within the electrode exhibit different swelling levels. Then, as the cycle progresses, the pores within the electrode are reduced due to the influence of the volume expansion of the silicon-based active material and by-products caused by particle breakage, and thus a contact loss is increased.

Referring to Comparative Examples 2 and 3, even when either Formula (1) or Formula (2) satisfies the scope of the present disclosure, when the negative electrode composition does not satisfy both the ranges of Formula (1) and Formula (2), it was found that the active materials still exhibit different swelling levels and thus a low life and a high resistance increase rate are exhibited.

The above detailed description is intended to illustrate and explain the present disclosure. Also, the above-mentioned description merely illustrates and describes the embodiment of the present disclosure, and as described above, the present disclosure may be used in various other combinations, modifications, and environments, and can be changed or modified within the scope of the invention disclosed in the present specification, the scope equivalent to the above-described disclosed contents and/or the scope of technology or knowledge in the art. Therefore, the above detailed description of the invention is not intended to limit the invention to the disclosed embodiment. Also, the appended claims should be construed as including other embodiments as well.

**Claims**

1.    A negative electrode composition comprising:

a silicon-based active material; and
a carbon-based active material,
wherein the negative electrode composition satisfies Formulas (1) and (2):

$$\text{Formula (1): } 0.7 \leq X1/Y1 \leq 1.5$$

$$\text{Formula (2): } 0.08 \leq X2/Y2 \leq 0.5$$

in Formula (1), X1 represents a sphericity of the silicon-based active material, and Y1 represents a sphericity of the carbon-based active material, and

in Formula (2), X2 represents an average particle diameter (D50) of the silicon-based active material, and Y2 represents an average particle diameter (D50) of the carbon-based active material.

2. The negative electrode composition according to claim 1, wherein X1 is 0.6 to 1.

3. The negative electrode composition according to claim 1, wherein Y1 is 0.7 to 1.

4. The negative electrode composition according to claim 1, wherein X2 is 1 $\mu$m to 15 $\mu$m.

5. The negative electrode composition according to claim 1, wherein Y2 is 5 $\mu$m to 30 $\mu$m.

6. The negative electrode composition according to claim 1, wherein the silicon-based active material includes at least one selected from Si, $SiO_x$ (0<x<2), Si/C, and Si-alloys.

7. The negative electrode composition according to claim 1, wherein the silicon-based active material includes Si, and the Si is included in an amount of 70 parts by weight or more based on 100 parts by weight of the silicon-based active material.

8. The negative electrode composition according to claim 1, wherein the carbon-based active material includes at least one selected from artificial graphite and natural graphite.

9. The negative electrode composition according to claim 1, wherein a content of the silicon-based active material is 1 part by weight to 20 parts by weight based on 100 parts by weight of the negative electrode composition.

10. The negative electrode composition according to claim 1, wherein a content of the carbon-based active material is 70 parts by weight to 97 parts by weight based on 100 parts by weight of the negative electrode composition.

11. A negative electrode comprising:

    a negative electrode current collector layer; and
    a negative electrode active material layer provided on one surface or both surfaces of the negative electrode current collector layer,
    wherein the negative electrode active material layer includes the negative electrode composition according to any one of claims 1 to 10.

12. A secondary battery comprising:

    a positive electrode;
    the negative electrode according to claim 11;
    a separator provided between the positive electrode and the negative electrode; and
    an electrolyte.

13. A battery module comprising the secondary battery according to claim 12.

14. A battery pack comprising the secondary battery according to claim 12.

15. A battery pack comprising the battery module according to claim 13.

16. A vehicle comprising the battery pack according to claim 14.

17. The negative electrode composition according to claim 1, wherein the silicon-based active material has a Brunauer, Emmett, Teller (BET) specific surface area of 0.01 m²/g to 150.0 m²/g.

18. The negative electrode composition according to claim 1, wherein the carbon-based active material uses natural graphite, artificial graphite, or a mixture of natural graphite and artificial graphite.

[FIG. 1]

(a)

(b)

[FIG. 2]

(a)

(b)

[FIG. 3]

[FIG. 4]

[FIG. 5]

## INTERNATIONAL SEARCH REPORT

| International application No. |
|---|
| **PCT/KR2025/095554** |

| A. | CLASSIFICATION OF SUBJECT MATTER |
|---|---|

**H01M 4/36**(2006.01)i; **H01M 4/587**(2010.01)i; **H01M 4/38**(2006.01)i; **H01M 4/48**(2010.01)i; **H01M 4/133**(2010.01)i; **H01M 4/134**(2010.01)i; **H01M 10/0525**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/36(2006.01); H01M 10/052(2010.01); H01M 10/0525(2010.01); H01M 10/054(2010.01); H01M 4/133(2010.01); H01M 4/1395(2010.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 음극(anode), 활물질(active material), 실리콘(silicon), 흑연(graphite), 구형화도 (sphericity), 평균 입경(median particle size, d50)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2023-0139067 A (LG ENERGY SOLUTION, LTD.) 05 October 2023 (2023-10-05)<br>claim 1; paragraphs [0035], [0051], [0054], [0056], [0058], [0059], [0062], [0064] | 1-18 |
| Y | KR 10-2024-0057348 A (LG ENERGY SOLUTION, LTD.) 02 May 2024 (2024-05-02)<br>claim 2; paragraphs [0056]-[0063] | 1-18 |
| A | KR 10-2024-0096376 A (LG ENERGY SOLUTION, LTD.) 26 June 2024 (2024-06-26)<br>claims 1, 8, 9, 11, 18, 20, 21; paragraphs [0037], [0057], [0058], [0060], [0071], [0072], [0172] | 1-18 |
| A | KR 10-2019-0047195 A (LG CHEM, LTD.) 08 May 2019 (2019-05-08)<br>abstract; claims 1, 4, 7-13; paragraphs [0025], [0051], [0062], [0082], [0083] | 1-18 |
| A | KR 10-2023-0155618 A (NEXEON LTD.) 10 November 2023 (2023-11-10)<br>abstract; claims 1, 3, 6, 11-14, 16, 18, 25; paragraphs [0030], [0078], [0195] | 1-18 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 December 2025** | **06 January 2026** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**TRANSLATION**

### INTERNATIONAL SEARCH REPORT
**Information on patent family members**

International application No.

**PCT/KR2025/095554**

| Patent document cited in search report | | | Publication date (day/month/year) | Patent family member(s) | | | Publication date (day/month/year) |
|---|---|---|---|---|---|---|---|
| KR | 10-2023-0139067 | A | 05 October 2023 | CN | 117693831 | A | 12 March 2024 |
| | | | | EP | 4340060 | A1 | 20 March 2024 |
| | | | | EP | 4340060 | A4 | 02 July 2025 |
| | | | | JP | 2024-526056 | A | 17 July 2024 |
| | | | | JP | 7744081 | B2 | 25 September 2025 |
| | | | | KR | 10-2891895 | B1 | 26 November 2025 |
| | | | | US | 2024-0222601 | A1 | 04 July 2024 |
| | | | | WO | 2023-182852 | A1 | 28 September 2023 |
| KR | 10-2024-0057348 | A | 02 May 2024 | CA | 3260579 | A1 | 27 March 2025 |
| | | | | CN | 119365999 | A | 24 January 2025 |
| | | | | EP | 4528850 | A1 | 26 March 2025 |
| | | | | EP | 4528850 | A4 | 29 October 2025 |
| | | | | JP | 2025-525341 | A | 05 August 2025 |
| | | | | KR | 10-2025-0004998 | A | 09 January 2025 |
| | | | | US | 2024-0136503 | A1 | 25 April 2024 |
| | | | | US | 2024-0234690 | A9 | 11 July 2024 |
| | | | | WO | 2024-085622 | A1 | 24 April 2024 |
| KR | 10-2024-0096376 | A | 26 June 2024 | CN | 119366000 | A | 24 January 2025 |
| | | | | EP | 4539156 | A1 | 16 April 2025 |
| | | | | JP | 2025-524606 | A | 30 July 2025 |
| | | | | JP | 7776212 | B2 | 26 November 2025 |
| | | | | WO | 2024-128732 | A1 | 20 June 2024 |
| KR | 10-2019-0047195 | A | 08 May 2019 | CN | 111183538 | A | 19 May 2020 |
| | | | | CN | 111183538 | B | 13 May 2022 |
| | | | | EP | 3683871 | A2 | 22 July 2020 |
| | | | | EP | 3683871 | A4 | 11 November 2020 |
| | | | | EP | 3683871 | B1 | 01 December 2021 |
| | | | | KR | 10-2321261 | B1 | 03 November 2021 |
| | | | | PL | 3683871 | T3 | 21 March 2022 |
| | | | | US | 12034148 | B2 | 09 July 2024 |
| | | | | US | 2021-0202931 | A1 | 01 July 2021 |
| | | | | US | 2023-0369567 | A1 | 16 November 2023 |
| | | | | WO | 2019-083330 | A2 | 02 May 2019 |
| | | | | WO | 2019-083330 | A3 | 13 June 2019 |
| KR | 10-2023-0155618 | A | 10 November 2023 | CN | 107223288 | A | 29 September 2017 |
| | | | | CN | 107223288 | B | 02 February 2021 |
| | | | | EP | 3231027 | A1 | 18 October 2017 |
| | | | | EP | 3231027 | B1 | 27 February 2019 |
| | | | | GB | 2533161 | A | 15 June 2016 |
| | | | | GB | 2533161 | B | 24 May 2017 |
| | | | | GB | 2533161 | C | 24 July 2019 |
| | | | | JP | 2017-538267 | A | 21 December 2017 |
| | | | | KR | 10-2017-0118044 | A | 24 October 2017 |
| | | | | KR | 10-2599576 | B1 | 07 November 2023 |
| | | | | KR | 10-2834354 | B1 | 17 July 2025 |
| | | | | US | 10476072 | B2 | 12 November 2019 |
| | | | | US | 2017-0346079 | A1 | 30 November 2017 |
| | | | | WO | 2016-092335 | A1 | 16 June 2016 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240124737
- KR 1020250128957